# FASCICULE DE BREVET EUROPEEN

(11) **EP 0 747 617 B1**
(45) Date de publication et mention de la délivrance du brevet: **25.07.2001**
(21) Numéro de dépôt: 96630029.5
(22) Date de dépôt: 30.04.1996
(51) Int. Cl.: F16K 17/194

(54) **Soupape de limite de pression pour des conteneurs pressurisés**
Druckbegrenzungsventil für Druckbehälter
Pressure relief valve for pressure vessels

(30) Priorité: 08.06.1995 LU 88620
(43) Date de publication de la demande: 11.12.1996
(73) Titulaire: IDR HOLDING S.A., 2960 Luxembourg (LU)
(72) Inventeur:
(74) Mandataire: Waxweiler, Jean

(56) Documents cités:
- DE-U- 1 919 390
- DE-U- 1 935 820
- FR-A- 915 117
- FR-E- 73 550
- US-A- 2 224 394
- PATENT ABSTRACTS OF JAPAN vol. 010, no. 295 (M-523), 7 Octobre 1986 & JP-A-61 109978 (FUKUI SEISAKUSHO:KK), 28 Mai 1986,

## Description

La présente invention a pour objet une soupape de limite de pression pour des conteneurs pressurisés, en particulier des silos, c'est à dire un dispositif qui peut éviter que la pression d'un fluide opérateur contenu dans un récipient ne dépasse ou ne descende en dessous d'une valeur de sécurité pré-établie.

On connaît déjà une soupape de sécurité mécanique ayant un conduit, ou bouche, dont une extrémité communique avec l'espace interne d'un récipient dans lequel est contenu le fluide dont la pression doit être contrôlée. Son autre extrémité est accouplée à une autre plaque d'obturation qui grâce, par exemple, à un premier groupe de ressorts en parallèle, empêche de manière élastique de fermer la dite bouche de façon à ce que, lorsque la pression du fluide dépasse un niveau limite pré-établi, la plaque d'obturation, grâce à l'action du fluide, se déplace pour arriver dans une position d'ouverture et permette aussi au fluide en excès de s'écouler. Quand le danger de surpression disparaît, la plaque d'obturation se replace en position de fermeture, grâce à l'action élastique du dit groupe de ressorts.

La plaque d'obturation peut être dotée d'une partie centrale mobile par rapport à une zone annulaire périphérique de la plaque-même, partie centrale actionnée grâce à un deuxième groupe de ressorts qui agissent dans la même direction et dans le sens opposé par rapport au premier groupe de ressorts. La dite partie centrale et mobile est positionnée du côté de la dite zone annulaire tourné vers l'intérieur du récipient, de façon à pouvoir se détacher de la dite zone annulaire de la plaque d'obturation lorsque la pression du dit fluide opérateur descend en dessous d'une valeur pré-établie, laissant ainsi entrer dans le récipient de l'air provenant de l'extérieur jusqu'à ce que cela compense le déséquilibre qui s'est créé à l'intérieur. En outre, l'ouverture pour l'écoulement du fluide, réglée grâce à la mise en activité de la soupape, est très limitée du moment que les déplacements de la plaque d'obturation par rapport à la position de fermeture sont empêchés de façon progressive en correspondance avec les forces élastiques croissantes exercées par les ressorts; ceci a pour effet d'augmenter la durée du passage de surpression ou de manque de pression et par conséquent le rique de domages sur la structure du récipient est plus élevé.

En outre, l'actionnement de la soupape se révèle être incertain, en particulier lorsque la variation de pression à l'intérieur du récipient se fait lentement: en effet, au moment où les valeurs de pression sont proches des valeurs limites pré-établies, les ressorts se fatiguent et ils ne sont plus aptes à provoquer un déplacement suffisant de la plaque d'obturation, ou de ses parties mobiles afin de rétablir un niveau de pression qui soit assez éloigné de la valeur limite. Par conséquent, il se peut que la pression à l'intérieur du récipient soit proche de la valeur maximum pendant des durées prolongées, arrivant même à la dépasser sans que la soupape puisse intervenir de façon voulue.

En outre, la constante élastique des ressorts insérés dans ce genre de soupape doit être très élevée puisque les ressorts doivent garantir la fermeture de la plaque d'obturation sur la bouche placée directement entre l'espace interne du conteneur et l'extérieur: une constante élastique de valeur réduite provoquerait une ouverture indésirable de la soupape même en cas de pression non dangereuse. Cela entraîne une faible sensibilité de la soupape même en cas de niveaux limite de pression élevés où des constantes élastiques de ressorts sont nécessaires.

Un exemple d'une telle soupape est représenté par DE-U-1919390 qui est décrit dans le préambule de la revendication 1.

On connaît en outre des soupapes de limite de pression à commandes électromagnétiques. Celles-ci ont un coût très élevé et ont besoin d'une ligne d'alimentation électrique spéciale.

Des solutions de perfectionnements peuvent être apportées de façon à éliminer les inconvénients cités ci-dessus, en référence aux soupapes de limite de pression qui ne sont pas alimentées grâce à l'électricité.

Il est donc nécessaire de résoudre le problème technique qui consiste à trouver une soupape de limite de pression actionnée non électriquement, qui permette de maintenir la configuration d'ouverture d'un organe d'obturation correspondant jusqu'à ce que le niveau de pression à l'intérieur duquel elle est associée soit différent de manière importante d'une valeur limite pré-établie.

Selon un aspect particulier du problème technique, la soupape doit en outre posséder une sensibilité élevée, en d'autres termes elle doit être actionnée de manière rapide et sûre dans n'importe quelle condition de fonctionnement

Selon un autre aspect du problème technique, la soupape doit pouvoir fonctionner aussi bien en cas de surpression, afin de réduire la pression à l'intérieur du conteneur à un niveau bien inférieur à la dite valeur limite, qu'en cas de dépression, afin de ramener la pression à l'intérieur du conteneur à un niveau bien plus important que la valeur limite.

Le tout de manière simple et à bon marché.

La solution proposée par la présente invention réside dans l'adoption d'une soupape de limite de pression selon la revendication 1. Des modes de réalisation avantageux sont décrits dans les revendications dépendantes.

Cette solution permet d'obtenir d'importants avantages en rendant la rigidité des moyens élastiques indépendante de la valeur limite de pression qui entraîne la mise en marche de la soupape. Cela permet donc d'adopter des constances élastiques très basses même pour des valeurs limite de pression très élevées. On obtient ainsi par consequence une sensibilité très importante.

Elle est particulièrement avantageuse surtout parce que la force de réaction necessaire à la mise en action de la masse calibrée est une substance indépendante de la position de l'organe obturateur par rapport au conduit communiquant avec le récipient pressurisé.

La soupape peut agir de manière particulièrement rapide puisque, même lorsqu'elle est soulevée de quelques dixièmes de millimètres seulement par rapport à sa position de repos en appui sur le trou de la chambre auxiliaire, immédiatement l'ouverture de l'organe obturateur.

Elle permet une réalisation particulièrement simple et fialbe de l'organe obturateur.

Une mise en pratique de l'invention apparaît dans les 3 dessins annexés.

La Figure 1 représente une section verticale d'une soupape de limite selon l'invention dans une position de fermeture au repos.

La Figure 2 représente un détail, fortement agrandi et interrompu, de l'ancrage périphérique de l'organe obturateur ayant la forme d'une membrane élastique.

La Figure 3 est une section semblable à celle de la figure 1, qui met en outre en évidence le dispositif gravitationnel de pilotage de l'organe obturateur avec la masse calibrée en position soulevée avant intervention.

La Figure 4 est une section semblable à celle de la Figure 3 mais au moment de l'ouverture de l'organe obturateur.

La Figure 5 est une vue de haut, sectionnée et interrompue de manière parallèle, de la Figure 1.

La Figure 6 est un détail, fortement agrandi et interrompu de la zone d'accouplement de l'organe obturateur avec l'extrémité externe correspondante du conduit qui communique avec l'intérieur du conteneur.

La Figure 7 est un détail, fortement agrandi et interrompu, de la zone d'accouplement périphérique de la masse calibrée è l'ouverture de la chambre auxilaire.

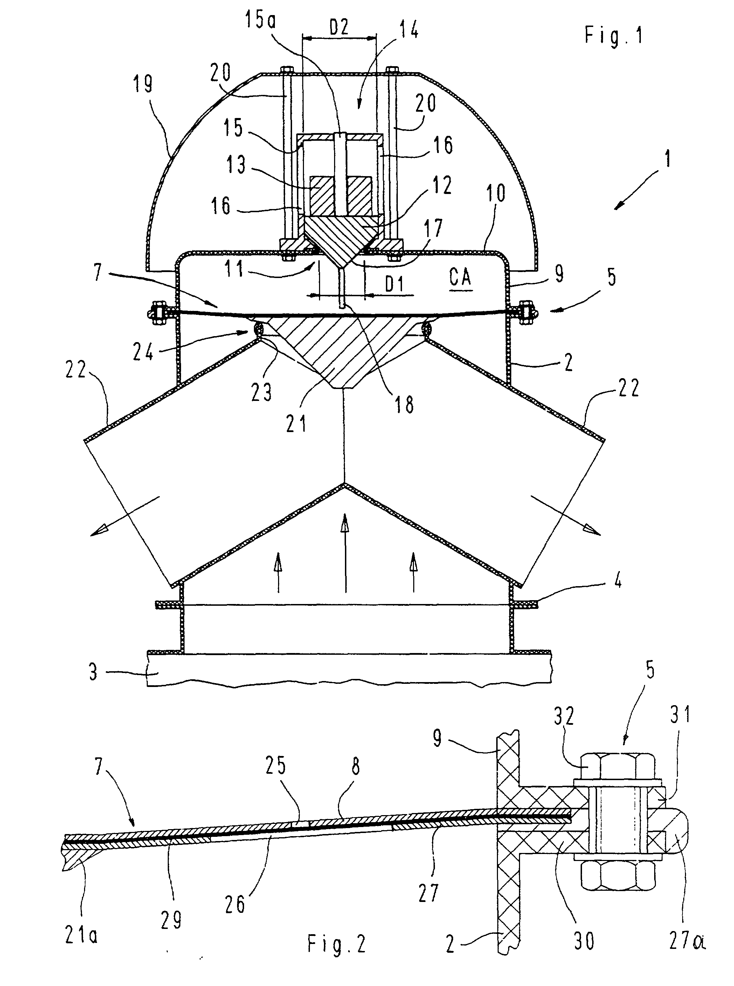

Une soupape de limite de pression 1 selon l'invention, comprend un conduit 2 qui communique avec l'intérieur du conteneur 3 grâce à une flasque 4 se trouvant à son extrémité inférieur interne, l'extrémité supérieure externe du conduit 2 étant dotée de moyens d'ancrage 5 périphériques de l'organe obturatuer 7, qui comprend de préférence une membrane élastique 8 (Fig.2), ancrée le long du bord externe aux moyens d'ancrage 5.

Le conduit 2 se prolonge vers le haut, au delà de la membrane 8, dans un tambour 9, doté dans sa partie supérieure de parois transversales 10 d'extrémité, délimitant dans la partie supérieure une chambre auxiliaire CA, délimitée par le dit tambour 9 par les parois transversales 10 et la membrane 8 de l'organe obturateur 7, la paroi transversale 10 est dotée d'une ouverture 11 sur laquelle est appuyé un corps obturateur 12 dont est doté, dans sa partie inférieure, une masse 13 calibrée de manière à garder fermée l'ouverture 11 chaque fois que la pression à l'intérieur de la chambre auxiliaire CA est inférieure à la valeur pré-établie.

Le corps obturateur 12, et donc la masse calibrée 13 qui lui est accouplée, est guidé de manière à coulisser entre les colonnes 15 périphériques dont est doté un châssis à cage 14 grâce à une tige de guidage 15a qui dépasse de l'extrémité supérieure du dit corps obturateur: entre chaque colonne 15 et la colonne périphérique précédente ou suivante, un ample passage 16 est obtenu de manière avantageuse. Le dit corps obturateur 12 offre une surface d'étanchéité inférieure 17, avantageusement troncoconique, qui a pour but d'interagir avec l'ouverture 11 lors de la fermeture et dotée dans sa partie inférieure d'un appendice inférieur 18, qui a pour but de garder une distance minimum pré-établie entre le dit obturateur 12 et le dit organe obturateur 7: l'ensemble du dit châssis à cage 14 avec le corps obturateur 12 correspondant et la masse calibrée 13 forment en substance un dispositif de pilotage de l'organe obturateur 7 comme il ressortira ci-après.

L'ouverture 11 de la chambre auxiliaire CA, ainsi que la section transversale du dit corps obturateur 12 peuvent avoir une forme circulaire: dans ce cas le diamètre D1 de l'ouverture 11 est avantageusement inférieur au diamètre D2 de la section transversale maximum du corps obturateur 12. De cette manière, lorsque la pression, à l'intérieur de la chambre auxiliaire CA, en agissant sur une section de base de diamètre D1, atteint une valeur telle qu'elle provoque le détachement du corps obturateur 12 par rapport à l'ouverture 11, après la phase de détachement, la pression même agit sur la section D2 de diamètre plus grand et provoque ainsi le soullèvement rapide de la masse calibrée 13 entre les colonnes 15. Cela signifie que l'on évite de dangereux blocages ou arrêts de la masse calibrée 13 et de l'organe obturateur 12 correspondant en cas de valeurs de pression légèrement supérieures à la valeur limite de pression, tout ceci étant avantageux en ce qui concerne la sécurité et la rapidité d'actionnement.

Au dessous de la chambre auxiliaire CA et du dispositif de pilotage 12,13,14,15,16,17,18, on trouve une calotte 19 de protection supportée par la paroi transversale 10 grâce à des montants 20. Dans sa partie centrale, l'organe obturateur 7 est doté dans sa partie inférieure d'une masse obturatrice 21, qui s'avance vers le bas à l'intérieur d'un conduit bilatéral 22 de communication avec l'espace externe ayant une partie supérieure 23 insérée coaxialement à l'intérieur du conduit 2 qui communique avec le conteneur 3 et qui se prolonge vers le bas en 2 bras divergents en forme de 'V' renversé afin de guider le fluide vers l'extérieur ou pour faire arriver l'air vers l'intérieur du conteneur, chaque fois que l'organe obturateur 7 est soulevé par rapport au bord supérieur du conduit de décharge 22, 23: la masse obturatrice 21 est avantageusement conique et a son sommet dirigé vers le bas afin de favoriser l'écoulement du fluide en excès hors du conteneur 3; en outre des moyens d'étanchéité périphériques 24 sont placés entre le bord supérieur de la partie supérieure 23 du conduit 22, 23 de décharge et la surface inférieure de l'organe obturateur qui s'y appuie, c'est à dire au niveau du bord 21a dont est dotée la masse obturatrice 21 à sa périphérie.

Ainsi que le montre la Figure 2, la dite membrane 8 élastique est dotée d'une formation de trous 25 passants, distribués de manière périphérique sur une surface annulaire de la dite membrane comprise entre le diamètre externe de la partie supérieure 23 du conduit de décharge et le diamètre interne du conduit 2 qui communique avec le conteneur 3: les trous 25 mettent en communication la chambre auxiliaire CA avec le conteneur 3 à travers le conduit 2 de manière à ce que, à chaque fois que la valeur de la pression du conteneur 3 change, il y ait un certain retard dans le changement de valeur de pression dans la chambre auxiliaire CA; il est en effet préférable que ceci ne se passe pas de manière instantanée.

La surface de la membrane 8 tournée vers l'intérieur du conteneur 3 est associée à un élément de filtration 26, qui a la forme d'une couronne circulaire, ancré à un bord annulaire 27 en matière élastique, par exemple du caoutchouc, au niveau de son bord périphérique externe et, au niveau de son bord périphéque interne, ancré à un prolongement radial 29 de la masse obturatrice 21, 21 a, eux aussi en matière élastique: l'élément de filtration 26 sert à empêcher que les trous 25 ne se bouchent sous l'effet de particules entraînées par le fluide qui sort sous pression du conteneur 3 après l'intervention de la soupape 1.

Les moyens d'ancrage 5 périphériques comprennent une flasque supérieure 30 du conduit 2, accouplée dans sa partie supérieure à une flasque inférieure 31 du tambour entre lesquelles se trouve, grâce aux moyens de jonctions amovibles 32, la zone périphérique du bord annulaire 27 dotée elle aussi d'un bord de retenue 27a.

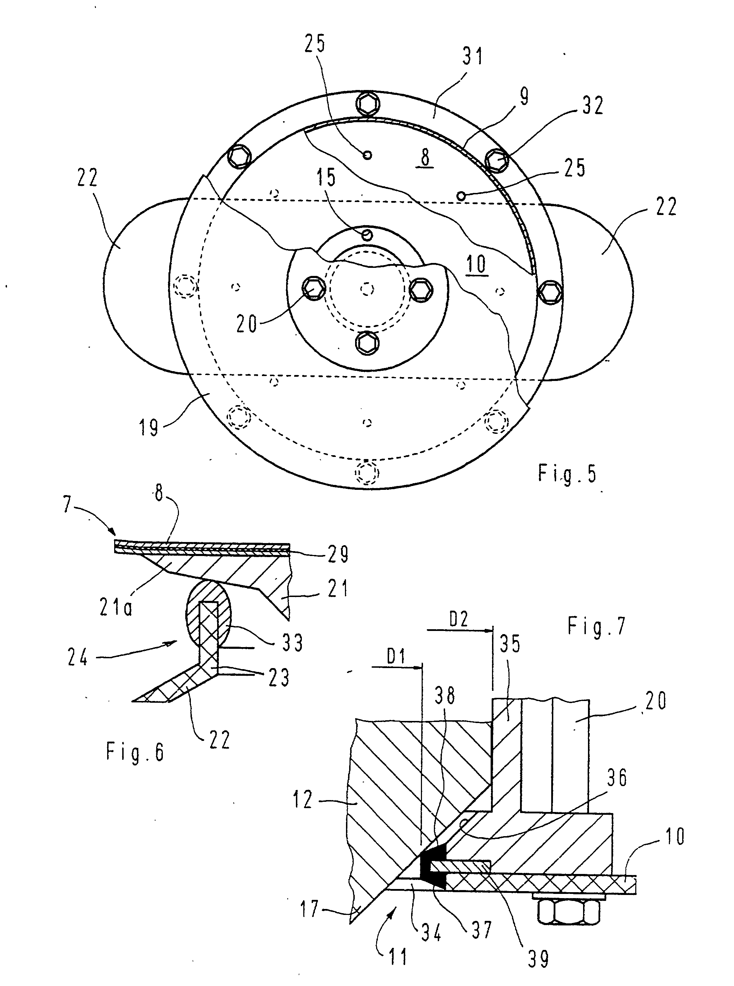

Comme le montre la Figure 6, les moyens d'étanchéité 24 peuvent être constitués par un anneau 33 d'étanchéité, fixé sur le bord supérieur de la partie supérieure 23 du conduit de décharge.

Comme le montre la Figure 8, l'ouverture 11 est constituée d'un trou passant 34 pratiqué dans la paroi transversale supérieure 10 sur la zone périphérique de laquelle, du côté opposé par rapport à la chambre auxiliaire CA, est fixée une base tubulaire 35 ayant de préférence une forme cylindrique et conjuguée avec la surface externe et unie à ce dernier en accouplement de forme, de manière à obtenir une étanchéité périphérique contre la sortie du fluide au moins dans une partie inférieure de la course de montée vers le haut du corps obturateur 12: dans la partie infériqure de sa course de montée, le corps obturateur 12 coulisse comme un piston jusqu'à dépasser le bord supérieur de la base tubulaire 35 au niveau duquel le fluide est libre de sortir à travers les passages latéraux réalisés entre les colonnes 15 du châssis à cage 14.

La partie tubulaire 15 accouplée à la paroi 10 possède un trou passant 36 ayant une forme troncoconique de la même conicité que le corps obturateur 12 et est doté d'un joint à lèvre 37 ayant un bord supérieur 38 d'une conicité mineure per rapport à la conicité de la surface inférieure d'étanchéité 17, afin de garantir une étanchéité maximum. Le joint 37, 38 est maintenu dans son logement au niveau du trou 34 grâce à l'anneau de positionnement 39 correspondant.

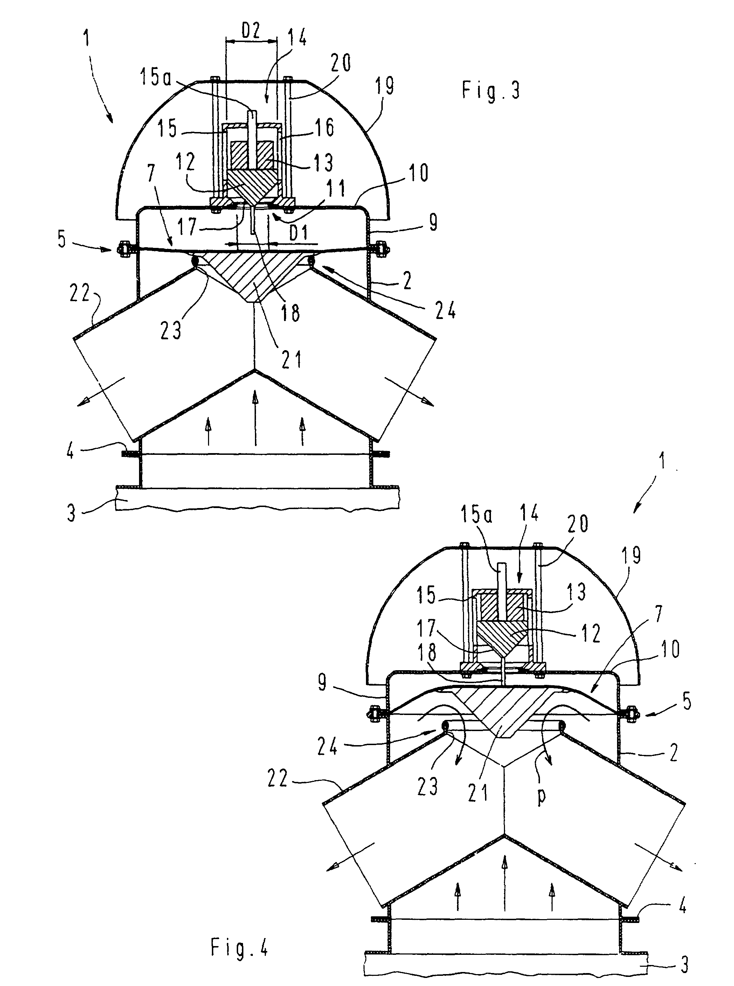

Le fonctionnement se produit de la manière suivante: lorsque la pression à l'intérieur du conteneur 3 augmente lentement, les trous 25 de la membrane 8 permettent à la pression dans la chambre auxiliaire CA d'augmenter simultanément exercant une poussée progressive et croissante sur le corps obturateur 12, 17 de la masse calibrée 13 jusqu'à la soulever et la déplacer rapidement vers le haut au point de dénuder les passages 16 du châssis à cage 14; ceci provoque une brusque diminution de la pression dans la chambre auxiliaire CA et produit un déséquilibre sur la membrane 8 qui, à cause de la pression plus basse qui agit sur son côté supérieur qui fait fonction de fond de la chambre même, se déplace vers le haut faisant communiquer réciproquement ainsi que les flèches de la figure 4 l'indiquent, les conduits 2, 22 produisant la décharge de la quantité de fluide en excès dans le récipient 3. Pendant toute le durée de la phase de décharge correspondante, la masse 13 calibrée est soulevée grâce à l'action de l' appendice 18 de distance qui la supporte sous la poussée vers le haut exercée par le fluide en sortie sur la membrane 8.

Lorsque la pression à l'intérieur du récipient 2 augmente rapidement, la pression à l'intérieur de la chambre CA, à cause du modeste diamètre des trous 25, n'augmente pas de manière correspondante, mais reste pratiquement à sa valeure initiale; ceci favorise le soullèvement initial de la membrane 8 sous l'effet de la pression du fluide agissant sur le côté inférieur qui ne subit aucune pression contraire d'intensité égale sur son côté supérieur.

Au moment où la surpression cesse, la membrane 8 descend de nouveau en appui sur la partie supérieure 23 du conduit 22 communiquant avec l'extérieur, sous l'effet du rappel élastique et de la poussée qu'exerce sur elle la masse obturatrice 21 vers le bas, permettant ainsi l'abaissement de la masse 13 calibrée.

Lorsque au contraire la pression diminue au dessous d'une valeur limite de calibrage, grâce aux trous 25 la baisse de pression dans le récipient 3 est transmise à la chambre auxiliaire CA: la force agissant vers le haut sur le côté supérieur de la membrane 8 sous l'effet de la baisse de pression advenue est plus importante que le force vers le bas exercée sur la surface annulaire qui se trouve entre la partie supérieure 23 et le diamètre interne du conduit 2 à cause de la baisse de pression plus importante de la force exercée par la masse obturatrice 21; la membrane 8 se soulève donc et laisse entrer dans le conteneur 3, en direction opposée par rapport à celle qui est indiquée par les flèches p en référence à la Figure 4, une quantité d'air suffisante pour faire remonter la pression dans le conteneur 3 à des valeurs proches de celles de la pression extérieure.

L'appendice 8 empêche que la masse calibrée 13 retourne dans sa position initiale de repos lorsque l'organe obturateur 7 à membrane se trouve dans une position de soulèvement, dans n'importe quelle condition de fonctionnemt décrite.

Dans la mise en pratique, les matériels, les dimensions, les détails d'execution, pourrons être différents de ceux qui sont indiqués, mais ils sont techniquement équivalents, sans pour cela sortir du domaine juridique de la présente invention.

## Revendications

1. Soupape de limite de pression pour conteneurs sous pression, en particulier des silos, comprenant un conduit (2) ayant une extrémité interne (4) qui communique avec l'intérieur du conteneur (3) et une extrémité externe (5) associée à un organe obturateur (7,8.21,21a,25,26,27,27a) subissant l'action de moyens élastiques de fermeture, correspondants, le dit organe obturateur (7, 8, 21, 21a, 25, 26, 27, 27a) étant rendu coopérant par un conduit (22, 23) de communication avec l'extérieur et étant placé entre la dite extrémité externe (5) et une chambre auxiliaire (CA) qui communique avec l'intérieur du conteneur et dotée d'un dispositif de pilotage (12, 13, 14, 15) de l'ouverture du dit organe obturateur (7, 8, 21, 21a, 25, 26, 27, 27a),
cararctérisée par le fait que le dit dispositif de pilotage (12, 13, 14, 15) est un dispositif de pilotage gravitationnel, comprenant une masse calibrée (15) qui coulisse à l'intérieur d'un châssis (14), de manière à être guidé le long d'une direction verticale afin de contrôler l'ouverture (11) d'un trou supérieur (34) réalisé dans la dite chambre auxiliaire (CA),
le dit châssis (14) comprend un corps de base (35), dans lequel coulisse de manière étanche en accouplement de forme un corps obturateur (12) associé à la dite masse calibrée (13), et destiné à contrôler l'ouverture (11) de la dite chambre auxiliaire,
le dit châssis (14) est doté dans sa partie supérieure de plusieurs colonnes (15), entre chaque colonne et la colonne suivante un ample passage (16) pour l'écoulement du fluide contenu dans le conteneur (3) est prévu,
le dit corps obturateur (12) est doté d'une partie active, de dimension limitée, tournée vers la chambre auxiliaire (CA) en position de repos, définissant la surface de base de la pression dans la chambre même,
le dit corps obturateur (12) est doté d'une surface inférieure d'étanchéité troncoconique (17) coopérant avec un joint périphérique (37) correspondant au trou (34) de l'ouverture (11), et
le dit corps obturateur (12) est doté dans sa partie supérieure d'une tige de guidage par rapport au châssis (14).

2. Soupape selon la revendication 1 caractérisée par le fait que la dite chambre auxiliaire (CA) est définie par un tambour qui constitue le prolongement vers le haut du dit conduit (2) communiquant avec l'intérieur du conteneur (3) et doté dans sa partie supérieure d'une surface (10) transversale d'extrémité supérieure dans laquelle a été effectuée la dite ouverture (11).

3. Soupape selon une des revendications précédentes, caractérisée par le fait que le dit organe obturateur est formé d'une membrane (8) élastique, faisant fonction de fond à la dite chambre auxiliaire (CA) et dotée d'une masse obturatrice (21) coopérant avec le dit conduit (22, 23) de communication avec l'extérieur.

4. Soupape selon une des revendications précédentes caractérisée par le fait que le dit organe obturateur (7, 8, 21, 21a, 25, 26, 27, 27a) est doté d'une appendice (18) inferieure qui a une hauteur telle que la fermeture de l'aperture (11) soit evitée quand l'organe obturateur (7, 8, 21, 21a, 25, 26, 27, 27a) est in position soulevée.

5. Soupape selon une des revendications précédentes caractérisée par le fait que le dit organe obturateur (7, 8, 21, 21a, 25, 26, 27, 27a) est doté d'une formation de trous (25) afin de rendre possible la communication entre l'intérieur du conteneur (3) et la chambre auxiliaire (CA).

6. Soupape selon une des revendications précédentes caractérisée par le fait que le dit organe obturateur (7, 8, 21, 21a, 25, 26, 27, 27a) est doté d'un élément de filtration (26) afin d'empêcher que les trous (25) ne se bouchent

7. Soupape selon une des revendications précédentes caractérisée par le fait que le dit conduit (22, 23) de communication avec l'extérieur comprend une partie supérieure (22) sur laquelle est appuyé un bord périphérique (21a) de la dite masse obturatrice (21), qui se prolonge dans sa partie inférieure en deux conduits (22) divergents vers le bas et passant à travers le conduit (2) de communication avec l'intérieur du conteneur (3).

8. Soupape selon une des revendications précédentes caractérisée par le fait que la dite membrane (8) est accouplée périphériquement au niveau de son bord périphérique, à des moyens d'ancrage (5) prévus au niveau de l'extrémité supérieure du conduit (2) communiquant avec l'intérieur du conteneur (3).

## Claims

1. Pressure relief valve for pressure vessels, in particular silos, comprising a pipe (2) having an internal end (4) which communicates with the interior of the container (3) and an external end (5) associated with an obturating member (7,8,21,21a,25,26,27,27a) subjected to the action of corresponding elastic closing means, said obturating member (7,8,21,21a,25,26,27,27a) being rendered cooperative by a pipe (22,23) for communicating with the exterior and being placed between the said external end (5) and an auxiliary chamber (CA) which communicates with the interior of the container and is provided with a device (12,13,14,15) for controlling the opening of said obturating member (7,8,21,21a,25,26,27,27a),
characterised by the fact that the said control device (12,13,14,15) is a gravitational control device comprising a calibrated mass (15) which slides inside a frame (14) so as to be guided along a vertical direction in order to control the opening (11) of an upper hole (34) realised in the said auxiliary chamber (CA),
the said frame (14) comprises a base body (35) in which an obturating body, associated with the said calibrated mass (13) and intended to control the opening (11) of the said auxiliary chamber, slides in an airtight manner with matching of shape,
the said frame (14) is provided in its upper portion with a plurality of pillars (15), between each pillar and the following pillar an ample passage (16) for the flow of the fluid contained in the container (3) is provided,
the said obturating body (12) is provided with an active portion, of limited dimension, turned toward the auxiliary chamber (CA) in the rest position, defining the base surface of the pressure in the chamber itself,
the said obturating body (12) is provided with a frustoconical lower sealing surface (17) co-operating with a peripheral seal (37) corresponding to the hole (34) of the opening (11), and
the said obturating body (12) is provided in its upper portion with a rod for guiding in relation to the frame (14).

2. Valve according to claim 1, characterised by the fact that the said auxiliary chamber (CA) is defined by a barrel which constitutes the upward extension of the said pipe (2) communicating with the interior of the container (3) and provided in its upper portion with an upper end transverse surface (10) in which the said opening (11) has been made.

3. Valve according to one of the preceding claims, characterised by the fact that the said obturating member is formed from an elastic membrane (8), acting as a base for the said auxiliary chamber (CA) and provided with an obturating mass (22) cooperating with the said pipe (22,23) for communicating with the exterior.

4. Valve according to one of the preceding claims, characterised by the fact that the said obturating member (7,8,21,21a,25,26,27,27a) is provided with a lower appendage (18) which is of such a length that closing aperture (11) is avoided when the obturating member (7,8,21,21a,25,26,27,27a) is in a raised position.

5. Valve according to one of the preceding claims, characterised by the fact that the said obturating member (7,8,21,21a,25,26,27,27a) is provided with a formation of holes (25) in order to render possible communication between the interior of the container (3) and the auxiliary chamber (CA).

6. Valve according to one of the preceding claims, characterised by the fact that the said obturating member (7,8,21,21a,25,26,27,27a) is provided with a filtering element (26) in order to prevent the holes (25) from becoming blocked.

7. Valve according to one of the preceding claims, characterised by the fact that the said pipe (22,23) for communicating with the exterior comprises an upper portion (22) on which is supported a peripheral edge (21a) of the said obturating mass (21), which is extended in its lower portion in two pipes (22), downwardly divergent and passing through the pipe (2) for communicating with the interior of the container (3).

8. Valve according to one of the preceding claims, characterised by the fact that the said membrane (8) is coupled peripherally at the level of its peripheral edge to anchoring means (5) provided at the level of the upper end of the pipe (2) communicating with the interior of the container (3).

## Patentansprüche

1. Druckbegrenzungsventil für Druckbehälter, insbesondere Silos, mit einer Leitung (2), die ein inneres Ende (4) hat, das mit dem Inneren des Behälters (3) in Verbindung steht, und ein äußeres Ende (5), dem ein Verschlußstück (7, 8, 21, 21a, 25, 26, 27, 27a) zugeordnet ist, das unter der Einwirkung einer entsprechenden elastischen Schließeinrichtung steht, wobei das Verschlußstück (7, 8, 21, 21a, 25, 26, 27, 27a) zusammenwirkend gemacht wird durch eine Leitung (22, 23) zur Verbindung mit Außen und zwischen dem äußeren Ende (5) und einer Hilfskammer (CA) angeordnet ist, die mit dem Inneren des Behälters in Verbindung steht und mit einer Steuervorrichtung (12, 13, 14, 15) für das Öffnen des Verschlußstückes (7, 8, 21, 21a, 25, 26, 27, 27a) versehen ist,
**dadurch gekennzeichnet**,
daß die Steuervorrichtung (12, 13, 14, 15) eine Schwerkraftsteuervorrichtung ist, die eine geeichte Masse (15) aufweist, welche im Inneren eines Rahmens (14) derart verschiebbar ist, daß sie längs einer vertikalen Richtung geführt ist, um die Öffnung (11) eines oberen Loches (34) zu steuern, das in der Hilfskammer (CA) gebildet ist,
daß der Rahmen (14) einen Grundkörper (35) aufweist, in welchem abgedichtet und unter formschlüssiger Kopplung ein Verschlußkörper (12) verschiebbar ist, der der geeichten Masse (13) zugeordnet ist und der dafür bestimmt ist, die Öffnung (11) der Hilfskammer zu steuern,
daß der Rahmen (14) in seinem oberen Teil mit mehreren Säulen (15) ausgerüstet ist, wobei zwischen jeder Säule und der nächsten Säule ein breiter Durchlaß (16) für das Ausströmen von in dem Behälter (3) enthaltenem Fluid vorgesehen ist,
daß der Verschlußkörper (12) mit einem aktiven Teil von begrenzter Abmessung versehen ist, das der Hilfskammer (CA) in der Ruheposition zugewandt ist und die Basisfläche des Druckes in derselben Kammer festlegt,
daß der Verschlußkörper (12) mit einer unteren, kegelstumpfförmigen Dichtfläche (17) versehen ist, welche mit einer Umfangsdichtung (37) zusammenwirkt, die dem Loch (34) mit der Öffnung (11) entspricht, und
daß der Verschlußkörper (12) in seinem oberen Teil mit einer Stange zur Führung in Bezug auf den Rahmen (14) versehen ist.

2. Ventil nach Anspruch 1, dadurch gekennzeichnet, daß die Hilfskammer (CA) durch eine Trommel gebildet ist, die nach oben hin eine Verlängerung der Leitung (2) bildet, welche mit dem Inneren des Behälters (3) in Verbindung steht, und in ihrem oberen Teil mit einer Oberfläche (10) quer zu dem oberen Ende versehen ist, in der die Öffnung (11) gebildet ist.

3. Ventil nach einem der vorhergehenden Ansprüche, dadurch gekennzeichnet, daß das Verschlußstück aus einer elastischen Membran (8) gebildet ist, die als Boden der Hilfskammer (CA) dient, und mit einer Verschlußmasse (21) versehen ist, welche mit der Leitung (22, 23) zur Verbindung mit Außen zusammenwirkt.

4. Ventil nach einem der vorhergehenden Ansprüche, dadurch gekennzeichnet, daß das Verschlußstück (7, 8, 21, 21a, 25, 26, 27, 27a) mit einem unteren Fortsatz (18) versehen ist, der eine derartige Höhe hat, daß das Schließen der Öffnung (11) vermieden wird, wenn das Verschlußstück (7, 8, 21, 21a, 25, 26, 27, 27a) in angehobener Position ist.

5. Ventil nach einem der vorhergehenden Ansprüche, dadurch gekennzeichnet, daß das Verschlußstück (7, 8, 21, 21a, 25, 26, 27, 27a) mit einer Formation von Löchern (25) versehen ist, um die Verbindung mit dem Inneren des Behälters (3) und der Hilfskammer (CA) möglich zu machen.

6. Ventil nach einem der vorhergehenden Ansprüche, dadurch gekennzeichnet, daß das Verschlußstück (7, 8, 21, 21a, 25, 26, 27, 27a) mit einem Filtrierelement (26) versehen ist, um zu verhindern, daß die Löcher (25) verstopfen.

7. Ventil nach einem der vorhergehenden Ansprüche, dadurch gekennzeichnet, daß die Leitung (22, 23) zur Verbindung mit Außen einen oberen Teil (22) aufweist, auf dem sich ein Umfangsrand (21a) der Verschlußmasse (21) abstützt, der sich in seinem unteren Teil in zwei Leitungen (22) fortsetzt, die nach unten hin divergieren und über die Leitung (2) zur Verbindung mit dem Inneren des Behälters (3) hinwegführen.

8. Ventil nach einem der vorhergehenden Ansprüche, dadurch gekennzeichnet, daß die Membran (8) auf der Höhe ihres Umfangsrandes peripher mit einer Verankerungseinrichtung (5) verbunden ist, die auf der Höhe des oberen Endes der Leitung (2) vorgesehen ist, welche mit dem Inneren des Behälters (3) in Verbindung steht.
